# EUROPÄISCHE PATENTANMELDUNG

(11) **EP 1 747 978 A2**
(43) Veröffentlichungstag der Anmeldung: **31.01.2007**
(21) Anmeldenummer: 06015580.1
(22) Anmeldetag: 26.07.2006
(51) Int. Cl.: B62D 29/04, B62D 21/16

(54) **Chassis, Trageeinrichtung und/oder Ladeeinrichtung für ein Nutzfahrzeug**

(30) Priorität: 27.07.2005 DE 102005035163
(71) Anmelder: Die Wethje GmbH, 94491 Hengersberg (DE)
(72) Erfinder: WETHJE, Reinhard, 94494 Hengersberg (DE)
(74) Vertreter: Vossius & Partner

(57) **Zusammenfassung**

Die Erfindung betrifft ein Chassis, eine Trageeinrichtung und/oder eine Ladeeinrichtung für ein Nutzfahrzeug, beispielsweise einen LKW. Das Chassis, die Trageeinrichtung und/oder die Ladeeinrichtung ist aus CFK- und/oder Aramid-Material gefertigt.

Ferner betrifft die Erfindung ein Verfahren zur Ausbildung eines Chassis, einer Trageeinrichtung und/oder einer Ladeeinrichtung für ein Nutzfahrzeug, wie ein LKW. Dieses Verfahren beinhaltet den Schritt, dass zumindest wesentliche Teile aus CFK- und/oder Aramid-Material gefertigt werden.

## Beschreibung

Die Erfindung betrifft Chassis, Trageeinrichtungen bzw. Ladeeinrichtungen für Nutzfahrzeuge aus CFK- bzw. Aramid-Material. Die Erfindung betrifft insbesondere Fahrgestelle für Lkw-Zugmaschinen, Anhänger usw.

Es sind Fahrgestelle für Lkw und Anhänger aus Stahl oder Leichtmetall bekannt, die im Wesentlichen leiterförmig aufgebaut sind. Aufgrund der relativ schweren zu erwartenden Ladung müssen derartige Bauteile stabil ausgeführt sein, und weisen daher ein großes Leergewicht auf, welches die maximal mögliche Zuladung negativ beeinflusst.

Der Erfindung liegt die Aufgabe zugrunde, ein verbessertes Chassis, eine verbesserte Trageeinrichtung und/oder Ladeeinrichtung für ein Nutzfahrzeug, wie ein Lkw, bzw. eine verbessertes Herstellungsverfahren dafür bereitzustellen.

Diese Aufgabe wird mit dem Gegenstand der Ansprüche gelöst. Die Unteransprüche stellen bevorzugte Ausführungsformen dar.

Die Erfindung weist die bevorzugten Vorteile auf, dass erfindungsgemäße Gegenstände sehr leicht sind, daher das Gewicht eines Lkw im unbeladenen Zustand erheblich minimiert, im beladenen Zustand die Beladung bzw. Nutzlast bis zum maximalen Gesamtgewicht größer ausfällt und daher die Betriebskosten für den Lkw erheblich senkt. Weiterhin kann die Stabilität gegenüber Stahl- bzw. Aluminiumkonstruktionen noch gesteigert werden und die Korrosion bzw. Spannungsrissbildung weiter vermieden werden.

Die Erfindung geht von dem Grundgedanken aus, das Chassis, die Trageeinrichtung und/oder die Ladeeinrichtung (nachfolgend auch "Bauteil" genannt) für ein Nutzfahrzeug, wie ein Lkw, aus CFK- und/oder Aramid-Material zumindest im Wesentlichen herzustellen. CFK ist eine übliche Abkürzung für Carbon-Faser-Kunststoff. Aramid wird auch als AFK abgekürzt und wird unter den Handelsnamen Kevlar oder Twaron vertrieben.

Bevorzugt sind die Elemente einteilig oder zumindest einstückig aus diesen Materialien gefertigt. Andere derartige Faserverbundmaterialien sind ebenfalls von der Erfindung umfasst.

In an sich bekannter Weise sind die genannten Materialen als Faserverbundwerkstoffe mit mehreren Lagen unterschiedlicher Faser-Ausrichtung aufgebaut und daher in der Lage, Belastungen aus verschiedenen Richtungen aufzunehmen.

Bevorzugt sind die Elemente mit einer darin integrierten Ausnehmung an einer Position vorgesehen, die die Steifigkeit, wie beispielsweise die Biegesteifigkeit und/oder die Torsionssteifigkeit verbessert. Diese können je nach primärer Belastung des Bauteils länglich in Längs- oder Querrichtung ausgerichtet sein. Bevorzugt sind mehrere derartiger Ausnehmungen vorgesehen. Der Begriff Ausnehmung soll jegliche offenen und geschlossenen Hohlräume umfassen.

Bevorzugt werden derartige Ausnehmungen mittels eines verlorenen Kerns gebildet, der während der Herstellung einen für das Fasermaterial zu ummantelnden Körper darstellt und nach der Herstellung entfernbar oder kollabierbar ist. Dies kann in bekannter Weise geschehen, wie z.B. durch späteres Entfernen durch Schmelzen. Auch physikalische oder chemische Verfahren sind geeignet, sofern sie die Struktur oder den Aufbau des Fasermaterials nicht beeinträchtigen. Dies hat den Vorteil, dass eine derartige Ausnehmung leicht geformt werden kann und das entsprechende Bauteil in einem Arbeitsgang einteilig mit großer Steifigkeit formbar ist.

Weiter ist die Ausnehmung als mindestens ein Behältnis für das Nutzfahrzeug ausgebildet. Besonders bevorzugt ist die Ausnehmung als Druckbehälter für die Bremsen ausgebildet. Für die Bremssysteme werden derartige Druckbehälter ohnehin benötigt, die somit integriert werden können und nicht mehr durch separate Maßnahmen ergänzt werden müssen. Darüber hinaus hat der Druck in den in den genannten Bauteilen vorhandenen Hohlräumen einen weiteren das gesamte Bauteil stabilisierenden Effekt, da sie eine die Form stabilisierende gleichmäßige Kraft auf die Struktur ausüben.

Zusätzlich oder alternative können auch Ausnehmungen als Stauraum ausgebildet sein, wobei ggf. Auskleidungen oder verschließbare Klappen vorzusehen sind. Diese können jedoch in einfacher Weise an das Bauteil aus Faserverbundwerkstoff befestigt werden.

Das CFK- und/oder Aramid-Material wird zumindest teilweise vor allem für mechanisch beanspruchte Bereiche in Sandwichbauweise ausgebildet. Dies bedeutet, dass zumindest zwei Schichten (ggf. mit mehreren Lagen) beabstandet gehalten werden, so dass bei nahezu Beibehaltung des Gewichts eine erheblich gesteigerte Festigkeit erzielt werden kann. Besonders bevorzugt sind die Bauteile im Wesentlichen oder vollständig aus derartig aufgebautem Material hergestellt.

Bevorzugt werden bei derartigem Sandwichaufbau eine Hartschaumstruktur, PVC, PU, Acryl und/oder eine Aluminiumstruktur als abstandwahrende Schichten verwendet.

Bevorzugt, sind zumindest relativ stark belastete Abschnitte oder Bereiche der Bauteile durch mehrere übereinander angeordnete Schichten geformt, deren Form zueinander korrespondieren, so dass die Schichten im Wesentlichen spannungsfrei übereinander, aufeinander bzw. ineinander passen. Das heißt beispielsweise bei zwei konkav aufeinander liegenden Schichten, dass die innere in der Konkavität befindliche der Schichten etwas kleiner geformt ist als die äußere.

Bevorzugt werden dann derartige Schichten mittels eines verbindenden Werkstoffes miteinander verbunden. Vorzugsweise können die Faserverbundwerkstoffe während der Ausbildung mittels Resin Transfer Molding (RTM) unter einem Überdruck oder Vakuuminfusion über einen Unterdruck mit Harz getränkt werden. Bevorzugte Harze sind Epoxidharz, Venylestherharz, ungesättigtes Polyesterharz bzw. entsprechende Systeme, die mit entsprechenden Härtersystemen zum Aushärten versehen sind. Bevorzugt oder alternativ weisen diese Schichten einen Duroplast- oder Thermoplast-Werkstoff auf, der zuvor mittels Lösungsmittel weich gemacht wurde. Alternativ können diese Schichten mit einem verbindenden Werkstoff imprägniert sein.

Bevorzugt wird dann der verbindende Werkstoffs z.B. mittels Mikrowelle und/oder Ultraschall aktiviert, d.h. getrocknet oder gehärtet, so dass die Schichten fest aneinander haften.

Vorzugsweise werden CFK- und Aramid-Materialien miteinander kombiniert. Grundsätzlich ist CFK-Material steifer bzw. härter als Aramid. Aramid ist hingegen preiswerter, leichter und dehnfähiger als CFK, so dass insbesondere ein Verbund aus CFK und Aramid besonders vorteilhaft ist. Insbesondere bei Bauteilen, die beispielsweise bei einem Unfall eine Aussparung, oder eine Ladeeinrichtung, wie eine Mulde, einen Silo bzw. einen Tank dicht halten sollen, ist eine derartige Materialkombination von Vorteil. Während das CFK bricht und z.B. für Gase oder Flüssigkeiten undicht würde, kann dann das Aramid aufgrund seiner Dehnbarkeit die Dichtigkeit beibehalten und ein Austreten verhindern. Dies ist umso vorteilhafter, da das Aramid preiswerter ist. Vorzugsweise in einer Sandwichbauweise von CFK und Aramid können mehrere Vorteile synergistisch verbunden werden.

Typischerweise verfärbt sich das Aramid-Material bei dauerhafter Licht- bzw. Sonnenbestrahlung. Daher ist es bevorzugt derart angeordnet oder behandelt, dass es im Betrieb im Wesentlichen keinem Licht ausgesetzt ist. Weiter bevorzugt ist bei einer Materialkombination das CFK-Material im Wesentlichen außen um das Aramid-Material angeordnet, so dass dieses keinem Licht ausgesetzt ist. Alternativ kann das Aramid-Material mit Farbe bedeckt werden.

Bevorzugt ist das Bauteil als Mulde, Silo oder Tank ausgebildet sein. Es kann also dem Aufnehmen von Stückgut, Gas und/oder Flüssigkeit dienen. Derartige Bauteile sind vorzugsweise zumindest teilweise in Sandwichbauweise ausgebildet, wobei in einer Ausführungsform Aramid bevorzugt innen, und CFK bevorzugt außen angeordnet sind. In diesem Falle erreicht man die zuvor genannten synergistischen Vorteile, den Aufbau steif, auslaufsicher bei einem möglichen Unfall und preiswert herzustellen.

Vorzugsweise ist eine derartige erfindungsgemäße Ladeeinrichtung zumindest teilweise mit mindestens einem Hohlraum mit einer Einrichtung zur Kühlung oder Erwärmung ausgestattet. Dies kann zur Konservierung von Nahrungsmittel, Vermeidung der Aushärtung von Baumaterialien usw. dienen.

Weiter bevorzugt ist eine Erwärmungseinrichtung mit einer Zuführung der Abgaswärme bzw. des Abgases des Nutzfahrzeugs vorgesehen. Alternativ kann ein Kältemittel oder ein Wärmemittel, welche durch einen mit dem Abgas versorgten Wärmetauscher strömt, durch einen Hohlraum in der Ladeeinrichtung strömen. In vorteilhafter Weise können derartige Hohlräume der weiteren Verbesserung der Steifigkeit in der zuvor dargestellten Weise dienen.

Bevorzugt kann ein Chassis bzw. Fahrwerk eines Lkw oder eines Anhängers ausgebildet sein, dass das Fahrwerk, vorzugsweise eine Einzelradaufhängung leicht angeordnet werden kann. Bekanntermaßen sind derartige Aufhängung bisher nicht oder kaum bei den zuvor dargestellten leiterförmigen Fahrwerken bzw. Chassis möglich.

## Patentansprüche

1. Chassis, Trageeinrichtung und/oder Ladeeinrichtung für ein Nutzfahrzeug, wie ein Lkw, aus CFK- und/oder Aramid-Material.

2. Chassis, Trageeinrichtung und/oder Ladeeinrichtung nach Anspruch 1, wobei diese einteilig bzw. einstückig ausgebildet sind.

3. Chassis, Trageeinrichtung und/oder Ladeeinrichtung nach einem der vorstehenden Ansprüche, wobei mindestens eine darin integrierte Ausnehmung an einer Position vorgesehen ist, die die Steifigkeit, wie beispielsweise die Biegesteifigkeit und/oder die Torsionssteifigkeit verbessert.

4. Chassis, Trageeinrichtung und/oder Ladeeinrichtung nach Anspruch 3, wobei die Ausnehmung mittels eines verlorenen Kerns gebildet ist.

5. Chassis, Trageeinrichtung und/oder Ladeeinrichtung nach Anspruch 3 oder 4, wobei die mindestens eine Ausnehmung als mindestens ein Behältnis für das Nutzfahrzeug ausgebildet ist.

6. Chassis, Trageeinrichtung und/oder Ladeeinrichtung nach Anspruch 5, wobei das Behältnis als Druckbehälter für die Bremsen und/oder Stauraum ausgebildet ist.

7. Chassis, Trageeinrichtung und/oder Ladeeinrichtung nach einem der vorhergehende Ansprüche, wobei das CFK- und/oder Aramid-Material zumindest teilweise für mechanisch beanspruchte Bereiche in Sandwichbauweise ausgebildet ist.

8. Chassis, Trageeinrichtung und/oder Ladeeinrichtung nach Anspruch 7, wobei mindestens eine zwischen Schichten aus CFK- und/oder Aramid-Material vorgesehene Zwischenlage aus einer Hartschaumstruktur, PVC, PU, Acryl und/oder einer Aluminiumstruktur gebildet ist.

9. Chassis, Trageeinrichtung und/oder Ladeeinrichtung nach einem der vorhergehende Ansprüche, wobei diese mehrere übereinander angeordnete Schichten aufweist, deren Form zueinander korrespondieren, so dass die Schichten im Wesentlichen spannungsfrei übereinander, aufeinander bzw. ineinander passen.

10. Chassis, Trageeinrichtung und/oder Ladeeinrichtung nach einem der vorhergehende Ansprüche, wobei mindestens zwei übereinander, aufeinander bzw. ineinander angeordnete Schichten mittels eines verbindenden Werkstoffes miteinander verbunden sind.

11. Chassis, Trageeinrichtung und/oder Ladeeinrichtung nach Anspruch 10, wobei die übereinander, aufeinander bzw. ineinander angeordnete Schichten über eine Aktivierung des verbindenden Werkstoffs z.B. mittels Mikrowelle und/oder Ultraschall fest angeordnet sind.

12. Chassis, Trageeinrichtung und/oder Ladeeinrichtung nach einem der vorhergehende Ansprüche, wobei eine CFK- und Aramid-Material miteinander kombiniert sind.

13. Chassis, Trageeinrichtung und/oder Ladeeinrichtung nach Anspruch 12, wobei das Aramid-Material angeordnet oder behandelt ist, dass es im Betrieb im Wesentlichen keinem Licht ausgesetzt ist.

14. Chassis, Trageeinrichtung und/oder Ladeeinrichtung nach Anspruch 13, wobei das CFK-Material im Wesentlichen außen um das Aramid-Material angeordnet ist.

15. Chassis, Trageeinrichtung und/oder Ladeeinrichtung nach Anspruch 13, wobei das Aramid-Material mit Farbe bedeckt ist.

16. Ladeeinrichtung nach einem der vorhergehende Ansprüche, wobei diese als Mulde oder Tank ausgebildet ist.

17. Ladeeinrichtung nach Anspruch 16, wobei die Mulde oder der Tank zumindest teilweise in Sandwichbauweise ausgebildet ist.

18. Ladeeinrichtung nach Anspruch 16 oder 17, wobei die Mulde oder der Tank zumindest teilweise mindestens einen Hohlraum mit einer Einrichtung zur Kühlung oder Erwärmung aufweist.

19. Ladeeinrichtung nach Anspruch 18, wobei die Erwärmungseinrichtung eine Zuführung der Abgaswärme aufweist.

20. Ladeeinrichtung nach Anspruch 19, wobei die Erwärmungseinrichtung eine Zuführung mindestens eines Teils des Abgases aufweist.

21. Ladeeinrichtung nach Anspruch 19, wobei die Erwärmungseinrichtung eine Zuführung von einem durch Abgas betriebenen Wärmetauscher aufweist.

22. Chassis und/oder Trageeinrichtung nach einem der Ansprüche 1-15, wobei diese für das Anbringen oder den Einbau einer Einzelradaufhängung ausgebildet sind.

23. Verfahren zur Ausbildung eines Chassis, einer Trageeinrichtung und/oder einer Ladeeinrichtung für ein Nutzfahrzeug, wie ein Lkw, insbesondere für ein Chassis, eine Trageeinrichtung und/oder eine Ladeeinrichtung nach einem der vorhergehenden Ansprüche, mit dem Schritt des Herstellens zumindest wesentlicher Teile davon aus CFK- und/oder Aramid-Material.

24. Verfahren nach Anspruch 23, ferner mit dem Schritt des Ausbildens mindestens einer in dem Chassis, der Trageeinrichtung und/oder der Ladeeinrichtung integrierten Ausnehmung an einer Position, die die Steifigkeit, wie beispielsweise die Biegesteifigkeit und/oder die Torsionssteifigkeit verbessert.

25. Verfahren nach Anspruch 24, ferner mit dem Ausbilden der Ausnehmung mittels eines verlorenen Kerns.

26. Verfahren nach Anspruch 25, ferner mit dem Schritt des Ausbildens der Ausnehmung als mindestens ein Behältnis, wie als einen Druckbehälter für die Bremsanlage und/oder einen Stauraum.

27. Verfahren nach einem der Ansprüche 23-26, ferner mit dem Schritt des Ausbildens mehrerer übereinander angeordneter Schichten, deren Form zueinander korrespondieren, so dass die Schichten im Wesentlichen spannungsfrei übereinander, aufeinander bzw. ineinander passen.

28. Verfahren nach einem der Ansprüche 23-27, wobei das CFK- und/oder das Aramid-Material während der Ausbildung mittels Resin Transfer Molding (RTM) oder Vakuuminfusion mit Harz, insbesondere Epoxidharz-, Vinylesterharz-, und/oder ungesättigte Polyesterharz-Systeme, getränkt wird.

29. Verfahren nach Anspruch 28, wobei die Schichten einen Duroplast- oder Thermoplast-Werkstoff aufweisen, der zuvor mittels Lösungsmittel weich gemacht wurde.

30. Verfahren nach einem der Ansprüche 23-29, ferner mit dem Schritt des Verbindens mindestens zweier übereinander, aufeinander bzw. ineinander angeordnete Schichten mittels eines verbindenden Werkstoffes, mit dem die Schichten bevorzugt zuvor imprägniert wurden.

31. Verfahren nach Anspruch 30, wobei die Schichten über eine Aktivierung des verbindenden Werkstoffs mittels Mikrowelle und/oder Ultraschall fest angeordnet werden.

32. Verfahren nach einem der Ansprüche 23-31, ferner mit dem Schritt des Kombinierens des CFK- und Aramid-Materials miteinander.

33. Verfahren nach Anspruch 32, ferner mit dem Schritt des Anordnens oder Behandelns des Aramid-Materials derart, dass es im Betrieb im Wesentlichen keinem Licht ausgesetzt ist.

34. Verfahren nach Anspruch 33, wobei das CFK-Material im Wesentlichen außen um das Aramid-Material angeordnet wird.

35. Verfahren nach Anspruch 31, wobei das Aramid-Material mit lichtbeständiger Farbe bedeckt wird.

36. Verfahren nach einem der Ansprüche 23-34, wobei eine Ladeeinrichtung als Mulde, Silo oder Tank ausgebildet wird.

37. Verfahren nach Anspruch 35, wobei die Mulde, der Silo oder der Tank zumindest teilweise in Sandwichbauweise ausgebildet wird.

38. Verfahren nach Anspruch 35 oder 36, wobei die Mulde, der Silo oder der Tank zumindest teilweise mit mindestens einen Hohlraum mit einer Einrichtung zur Kühlung oder Erwärmung ausgebildet wird.

39. Verwendung einer vorgenannten Vorrichtung oder eines vorgenannten Verfahrens für die Ausbildung von Chassis, Trageeinrichtung und/oder Ladeeinrichtung für ein Nutzfahrzeug, wie einen Lkw.
